# EUROPÄISCHE PATENTSCHRIFT

(11) **EP 1 210 863 B1**
(45) Veröffentlichungstag und Bekanntmachung des Hinweises auf die Patenterteilung: **11.04.2007**
(21) Anmeldenummer: 01127680.5
(22) Anmeldetag: 21.11.2001
(51) Int. Cl.: A01F 15/08

(54) **Bindevorrichtungsantrieb für Ballenpressen**
Knotter driving means for a baler
Dispositif d'entraînement pour noueur dans une presse à balles

(30) Priorität: 04.12.2000 DE 10060211
(43) Veröffentlichungstag der Anmeldung: 05.06.2002
(73) Patentinhaber: Welger Maschinenfabrik GmbH, 38304 Wolfenbüttel (DE)
(72) Erfinder: Honhold, Joost, 38302 Wolfenbüttel (DE)

(56) Entgegenhaltungen:
- DE-B- 1 095 044
- DE-C- 804 616
- US-A- 5 156 085
- US-A- 6 070 403

## Beschreibung

Die Erfindung betrifft eine Bindevorrichtung für Ballenpressen, bestehend aus wenigstens einem Knüpfapparat und einer Bindenadel, welche beide von einer Knoterwelle angetrieben werden, die von dem Antrieb des Preßkolbens der Ballenpresse über eine Eintourenkupplung intermittierend antreibbar ist, wobei der Antrieb der Knoterwelle relativ zum Preßkolbenantrieb übersetzt ist.

Derartige Knüpfapparate werden am häufigsten in Ballenpressen zur Bildung von Ballen aus landwirtschaftlichen Erntegütern, aber auch zur Ballenbildung aus Papier, Pappe, recyclingfähigem Material und dergleichen eingesetzt. Auf der Oberseite des Preßkanales sind mehrere Knüpfapparate nebeneinander angeordnet. Nach Erreichen der gewünschten Ballenlänge verschließen die Knüpfapparate eine den Ballen umschlingende Bindegarnschlaufe durch Knotenbildung.

Alle zur Zeit auf dem Markt befindlichen Ballenpressen verwenden Knüpfapparate, deren Knoterwelle im Verhältnis 1:1 zur Kurbelumdrehung des Preßkolbens arbeitet. Die Knotenbildung erfolgt erst dann, wenn der Preßkolben sich von der Preßendstellung entfernt, so daß das Material in die Garnschlaufe expandiert und durch die Bindenadel Garn nachzieht, wodurch eine hohe "Fadenlose" erzeugt wird und ein Teil der Preßdichte verloren geht. Weitere Nachteile einer derartigen Bindevorrichtung sind aus der DE 10 95 044 ersichtlich und aufgrund der großen Ballen, (Querschnitt 1,2 m x 1,2 m x 2,5 m Länge) und der wesentlich höheren Preßdichten heute noch wesentlich gravierender, weil sich die Bautoleranzen mehrerer nebeneinander angeordneter Knüpfapparate addieren und somit feinere Einstellungen notwendig sind. Darüber hinaus sind die Bindenadeln durch die nachfolgenden Packungen gefährdet, weil die Bindenadeln noch teilweise im Preßkanal sind, wenn die nächste Packung kommt.

Der Grundgedanke der Lösung gemäß DE 10 95 044 besteht darin, den Preßkolbenhub zu der Knoterwellenumdrehung im Verhältnis 1 : 2 arbeiten zu lassen, so daß die Knotenbildung in der Preßendstellung des Preßkolbens (vordere Totpunktlage in Preßrichtung gesehen), d. h. in der halben Zeit erfolgt. Die Eingangsantriebswelle der Eintourenkupplung wird mit doppelter Drehzahl angetrieben. Die Eintourenkupplung muß über aufwendige Schaltmechanismen zusätzlich in Abhängigkeit vom Preßkolben gesteuert werden. Abgesehen von der komplizierten und störanfälligen Konstruktion dieser Auslösekinematik, weist die vorbekannte Bindevorrichtung zwei große Nachteile auf: Da die Knotenbildung direkt im Totpunkt erfolgt, entstehen sehr hohe Garnkräfte, d. h. die Bindegarnumschlingung muß praktisch die Expansionskraft des Preßgutes aushalten, die der Preßkolben in seiner Preßendstellung maximal erzeugt hat. Darüber hinaus ist das Übersetzungsverhältnis systembedingt auf 1 : 2 festgelegt und nicht variierbar.

Aufgrund dieser Nachteile hat sich diese Lösung in der Praxis nicht durchgesetzt. Trotz jahrzehntelanger und weltweit durchgeführter Entwicklungsarbeiten auf diesem Gebiet (z. B. DE 10 69 419) sind weitere Entwicklungen über das Versuchsstadium nicht hinausgekommen und schließlich in der Praxis ganz eingestellt worden.

Der Erfindung liegt die Aufgabe zugrunde, die eingangs beschriebene Ballenpresse hinsichtlich der Bindevorrichtung zu verbessern und für die Steuerung der Knoterwelle eine einfachere Lösung zu entwickeln.

Ausgehend von der eingangs beschriebenen Bindevorrichtung wird diese Aufgabe dadurch gelöst, daß die Übersetzungsmittel zwischen Eintourenkupplung und Knoterwelle angeordnet und so gestaltet sind, daß die Knoterwelle während einer ganzen Umdrehung der Eintourenkupplung ebenfalls eine ganze Umdrehung, jedoch schneller als die Eintourenkupplung ausführt.

Erfindungsgemäß erfolgt nunmehr der Eingriff in den Knoterwellenantrieb in Kraftflußrichtung hinter der Eintourenkupplung, so daß diese weiterhin im Verhältnis 1 : 1 zur Kurbelwellenumdrehung arbeitet und keine zusätzlichen Steuermittel benötigt werden, weil die Auslösung der Eintourenkupplung ausschließlich vom Meßrad der Ballenlänge unabhängig vom Preßkolben wie bisher erfolgt. Dadurch kann der Start der Knoterwellenumdrehung gegenüber der bisherigen Ausführung unverändert bleiben, jedoch wird die Bindenadel mit größerer Geschwindigkeit in und aus dem Preßkanal bewegt. Das Übersetzungsverhältnis bestimmt die Geschwindigkeit der Bindenadelauf- und -abbewegung und ist variierbar, so daß je nach Wahl des Übersetzungsverhältnisses nach dem Totpunkt oder auch im Totpunkt gebunden werden kann. Je weiter jedoch vom Totpunkt abgebunden wird, desto höher ist die Fadenlose und die verlorene Preßdichte. Weitere Vorteile der erfindungsgemäßen Lösung sind:
- Die Bindenadel ist früher aus dem Preßkanalbereich heraus, so daß eine Bindenadelgefährdung durch die nachfolgende Preßpackung nicht gegeben ist.
- Die Ballenform ist besser und die Preßdichte höher, da weniger Fadenlose.
- Die Bindenadel/Preßkolbeneinstellung kann sicher gewählt werden, da der Überlauf des Preßkolbens zur Bindenadel größer ist.
- Größere Einstelltoleranzen sind möglich.
- Die Konstruktion erfordert nur wenige einfache Teile zusätzlich, während viele Gleichteile der bisherigen Konstruktion unverändert bleiben.

In einer bevorzugten Ausgestaltung der Erfindung treibt die Eintourenkupplung die Knoterwelle oder eine Vorgelegewelle über ein Zahn- oder Tellerradsegment und über ein mit diesem zusammenwirkendes, auf der Knoterwelle oder einer Vorgelegewelle sitzendes Zahnrad oder Ritzel an. Durch Wahl des Übersetzungsverhältnisses, Eingriffslänge und Eingriffszeitpunkt läßt sich der Zeitpunkt der Knotenbildung wählen, so daß vorzugsweise in der Nähe des Totpunktes gebunden wird, d. h. wenn der Preßkolben um ein möglichst geringes Maß aus der Preßendstellung zuruckgegangen ist.

Grundsätzlich ist es aber auch möglich, daß der Knoterwelle ein Getriebe und diesem die Eintourenkupplung vorgeschaltet ist, wobei das Getriebe den Antrieb der Knoterwelle übersetzt und eine mit der Knoterwelle in Wirkverbindung stehende Schaltkupplung die Knoterwelle so startet und stoppt, daß diese ebenfalls eine Umdrehung ausführt. Für Neukonstruktionen der Bindeeinrichtung und ohnehin elektronischer Messung der Ballenlänge und Auslösung der Eintourenkupplung ist diese Lösung durchaus interessant, weil sie insgesamt die größten Variationsmöglichkeiten bietet.

Weitere zweckmäßige Ausgestaltungen ergeben sich aus den Unteransprüchen und aus der nachfolgenden Beschreibung mehrerer Ausführungsbeispiele anhand der Zeichnung.

Es zeigen:
- Fig. 1: eine Seitenansicht des Preßkanales einer Großballenpresse mit dem Bereich der Bindevorrichtung,

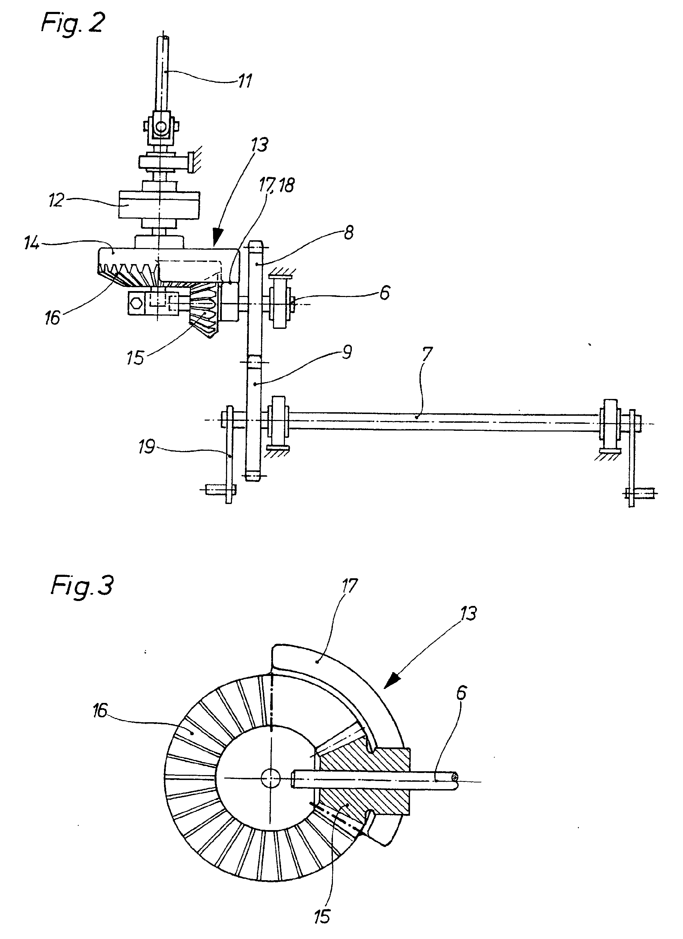

- Fig. 2: eine schematische Darstellung eines ersten, endungsgemäßen Antriebssystems der Bindevorrichtung,
- Fig. 3: in vergrößterter Darstellung ein Tellerradsegment mit einem Ritzel als Einzelheit in einer Ansicht nach Fig. 2,
- Fig. 4: ein zweites erfindungsgemäßes Antriebssystem in einer Darstellung gemäß Fig. 2 und
- Fig. 5, 6 und 7: jeweils ein weiteres erfindungsgemäßes Antriebssystem.

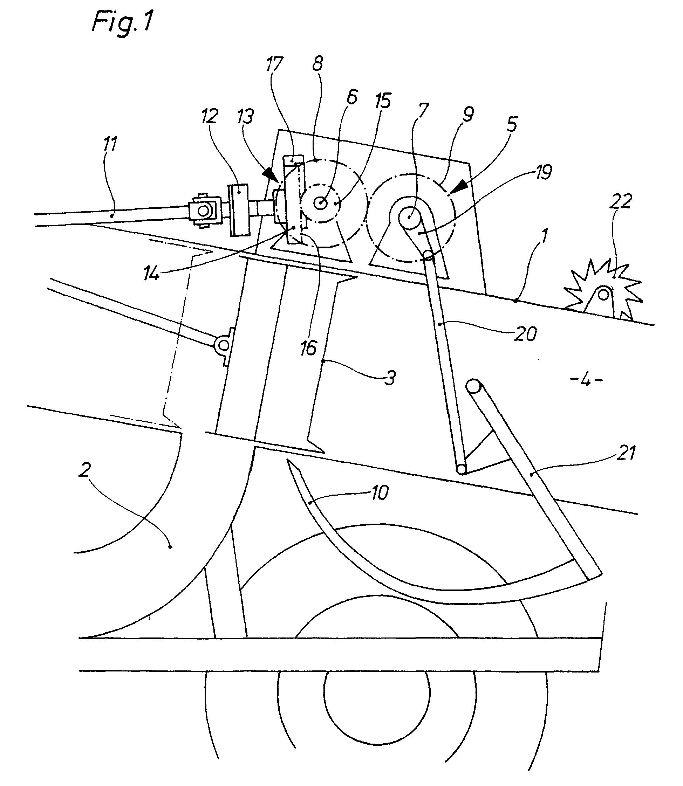

Bei einer in der Figur 1 nur teilweise dargestellten Großballenpresse 1 mit einem Zuführkanal 2, einem Preßkolben 3, einem Preßkanal 4 und einer Bindevorrichtung 5 wird über eine Vorgelegewelle 6 eine parallel dazu verlaufende Knoterwelle 7 angetrieben, auf welcher im Abstand nebeneinander nicht dargestellte Knüpfapparate gelagert sind. Auf der Vorgelegewelle 6 und auf der Knoterwelle 7 ist je ein Stirnrad 8, 9 drehfest angeordnet, die miteinander in Eingriff stehen und die gleichen Zähnezahlen haben. Durch die Stirnräder 8, 9 wird die Drehbewegung von der Vorgelegewelle 6 auf die Knoterwelle 7 übertragen. Von der Knoterwelle 7 wird der Antrieb der Bindenadeln 10 und der nicht dargestellten Knüpfapparate abgeleitet, die jeweils mit einem Knüpfapparat zusammenwirken. Die Antriebsübertragung erfolgt dabei über eine mit dem nicht dargestellten Antrieb des Preßkolbens 3 im Verhältnis 1 : 1 arbeitende Antriebswelle 11, auf welcher eine Eintourenkupplung 12 angeordnet ist, wie diese beispielsweise in der DE 94 72 68 näher beschrieben ist. Die Antriebswelle 11 ist rechtwinklig zur Vorgelegewelle 6 angeordnet und mit dieser durch einen Winkeltrieb 13 verbunden. Der Winkeltrieb 13 besteht aus einem mit der Ausgangsseite der Eintourenkupplung 12 fest verbundenen Tellerrad 14, welches in Eingriff steht mit einem auf der Vorgelegewelle 6 drehfest angeordnetem Ritzel 15. Das Tellerrad 14 ist über einen Winkelbereich von etwa 240° als verzahntes Tellerradsegment 16 ausgebildet, während ein Winkelbereich von etwa 120° am äußeren Umfang als Gleitfläche 17 ausgebildet ist. Das Tellerradsegment 16 kämmt mit dem Ritzel 15, das die gleiche Zähnezahl bzw. einen Zahn mehr hat wie das Tellerradsegment 16, so daß im gezeigten Beispiel die Knoterwelle 7 eine ganze Umdrehung beendet, während die Eintourenkupplung 12 eine zwei Drittel Umdrehung vollführt, wenn das Tellerradsegment 16 mit dem Ritzel 15 kämmt, das außerhalb der Verzahnung am Teil seines Umfanges auch eine als Exzenter ausgebildete Gleitfläche 18 aufweist. Während der restlichen ein Dritte! Drehung des Tellerrades 14 liegen die unverzahnten Gleitflächen 17, 18 von Tellerrad 14 und Ritzel 15 aneinander und dienen als Verdrehsicherung des Ritzels 15 gegenüber dem Tellerrad 14. Auf diese Art und Weise arbeitet die Knoterwelle 7 im Verhältnis 1 : 1,5 zur Antriebswelle 11, d. h. die Knoterwelle 7 dreht sich mit der 1,5-fachen Geschwindigkeit. Es ist ohne weiteres möglich, das Tellerradsegment 16 auf einen Winkelbereich von 120° zu reduzieren, so daß die Knoterwelle 7 während einer Drittel Umdrehung der Eintourenkupplung 12 eine ganze Umdrehung ausführen muß. Hierbei kann es allerdings zweckmäßig sein, dem Tellerradsegment 16 auch einen Winkelbereich mit einer Gleitfläche vorzuschalten, um auch durch Wahl des Starts der Knoterwellendrehung den optimalen Zeitpunkt der Knotenbildung zu gestalten. Von der Knoterwelle 7 wird der Antrieb über eine Kurbel 19, zu einer Zugstange 20 und einem Schwingarm 21 zu den Bindenadeln 10 übertragen.

Während des Preßvorganges des Ballens ist der Antrieb zur Knoterwelle 7 und den Bindenadeln 10 durch die Eintourenkupplung 12 unterbrochen. Die Bindenadeln 10 befinden sich dabei außerhalb des Preßkanals 4. Die Ermittlung der Ballenlänge erfolgt über ein oberhalb des Preßkanals 4 angeordnetes drehbares Sternrad 22, dessen zackenförmiger Umfang mit der Oberfläche des Ballens in Verbindung steht. Sobald die vorgewählte Ballenlänge erreicht ist, wird die Eintourenkupplung 12 vom Sternrad 22 über ein nicht dargestelltes Element betätigt und dadurch die Antriebsverbindung zur Knoterwelle 7 hergestellt und der Bindevorgang des Ballens ausgelöst, der nunmehr in verkürzter Zeit kurz hinter der Preßendstellung erfolgt, d. h. wenn der Preßkolben 3 seinen Rücklauf aus dieser begonnen hat. Dadurch bleibt der Preßkolben 3 während des schnellen Bindevorganges relativ länger am zuvor gepreßten Material, welches nicht expandieren und eine unerwünschte Fadenlose erzeugen kann.

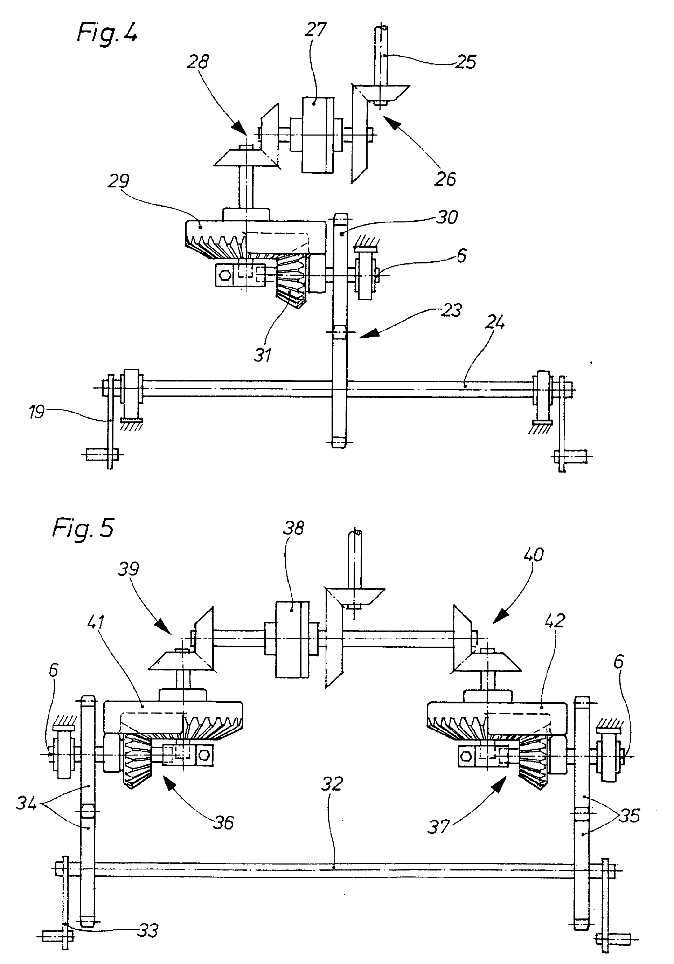

Bei dem in Fig. 4 dargestellten Antriebssystem ist ein im Verhältnis 1 : 1 arbeitendes Stirnradgetriebe 23 mittig zur Knoterwelle 24 angeordnet. Der Vorteil besteht darin, daß nach beiden Seiten der Knoterwelle 24 gleiche Drehmomente übertragen werden und damit keine einseitigen Verdrehungen der Knoterwelle 24 entstehen. Der Antrieb der Knoterwelle 24 erfolgt von einer mit dem Preßkolbenantrieb zusammenwirkenden Antriebswelle 25 über einen ersten Winkeltrieb 26 auf eine Eintourenkupplung 27 und von dieser über einen zweiten Winkeltrieb 28 auf das Tellerradsegment 29, das mit dem auf einem Stirnrad 30 befestigten Ritzel 31 kämmt. Anstelle des zweiten Winkeltriebes 28 und der Tellerradsegment/Ritzel Ausführung könnte auch ein Stirnradtrieb in Kombination mit einer Zahnradsegment/Zahnrad Übersetzung verwendet werden.

Das in Figur 5 dargestellte Antriebssystem unterscheidet sich von den vorherbeschriebenen Beispielen dadurch, daß der Knoterwelle 32 auf beiden Seiten in der Nähe der Kurbelarme 33 für den Bindenadelantrieb jeweils ein Stirnradtrieb 34, 35 mit je einer Tellerradsegment/Ritzel 36, 37 Übersetzung zugeordnet ist. Der Antrieb erfolgt über eine mittig angeordnete Eintourenkupplung 38 über je einen Winkeltrieb 39, 40 nach beiden Seiten auf die Tellerräder 41, 42. Bei dieser Ausführungsform erfährt die Knoterwelle 32 praktisch überhaupt keine Verdrillung.

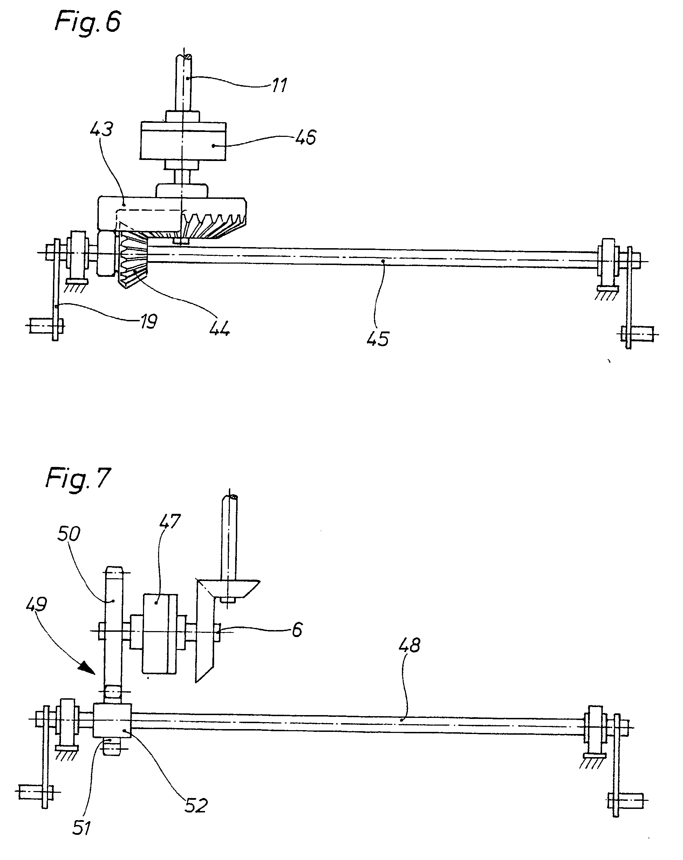

Einen geringeren Bauaufwand, jedoch einen großen Bauraumbedarf hat die in Figur 6 dargestellte Ausführungsform. Hierbei ist das mit einem Tellerradsegment 43 zusammenwirkende Ritzel 44 direkt auf der Knoterwelle 45 drehfest angeordnet und das Tellerradsegment 43 direkt an die Ausgangsseite der Eintourenkupplung 46 angeflanscht.

Eine weitere Möglichkeit zur Steuerung des Antriebes einer Knoterwelle zeigt Figur 7. Hierbei ist zwischen Eintourenkupplung 47 und Knoterwelle 48 ein Stirnradgetriebe 49 bestehend aus zwei Stirnrädern 50, 51 angeordnet, dessen Übersetzungsverhältnis so ausgelegt ist, daß die Knoterwelle 48 mit der gewünschten höheren Drehzahl antreibbar ist. Da beide Stirnräder 50, 51 vollverzahnt sind, müssen Start und Stop der Knoterwelle 48 durch eine zwischen Stirnrad 51 und Knoterwelle 48 angeordnete zusätzliche Kupplung 52 gesteuert werden, so daß auf eine ganze Umdrehung der Eintourenkupplung 47 eine ganze Umdrehung der Knoterwelle 48 mit erhöhter Drehzahl erfolgt. Im Beispiel hat Stirnrad 50 die doppelte Zähnezahl von Stirnrad 51, so daß bei sofortigem Start der Knoterwellendrehung mit der Drehung der Eintourenkupplung 47, die Kupplung 52 nach 180° Drehung der Eintourenkupplung 47 die Verbindung Stirnrad 51 zur Knoterwelle 48 freischaltet, wodurch die Knoterwelle 48 eine Umdrehung mit größerer Geschwindigkeit ausgeführt hat. Im übrigen entspricht die Funktionsweise den vorherbeschriebenen Ausführungsbeispielen.

### Bezugszeichenliste

- 1: Großballenpresse
- 2: Zuführkanal
- 3: Preßkolben
- 4: Preßkanal
- 5: Bindevorrichtung
- 6: Vorgelegewelle
- 7: Knoterwelle
- 8: Stirnrad
- 9: Stirnrad
- 10: Bindenadeln
- 11: Antriebswelle
- 12: Eintourenkupplung
- 13: Winkeltrieb
- 14: Tellerrad
- 15: Ritzel
- 16: Tellerradsegment
- 17: Gleitfläche
- 18: Gleitfläche
- 19: Kurbel
- 20: Zugstange
- 21: Schwingarm
- 22: Sternrad
- 23: Stirnradgetriebe
- 24: Knoterwelle
- 25: Antriebswelle
- 26: 1. Winkeltrieb
- 27: Eintourenkupplung
- 28: 2. Winkeltrieb
- 29: Tellerradsegment
- 30: Stirnrad
- 31: Ritzel
- 32: Knoterwelle
- 33: Kurbelarme
- 34, 35: Stimradantrieb
- 36, 37: Tellerradsegment/Ritzel
- 38: Eintourenkupplung
- 39, 40: Winkeltrieb
- 41, 42: Tellerräder
- 43: Tellerradsegment
- 44: Ritzel
- 45: Knoterwelle
- 46: Eintourenkupplung
- 47: Eintourenkupplung
- 48: Knoterwelle
- 49: Stirnradgetriebe
- 50, 51: Stirnräder
- 52: Kupplung

## Patentansprüche

1. Bindevorrichtung für Ballenpressen, bestehend aus wenigstens einem Knüpfapparat und einer Bindenadel (10), welche beide von einer Knoterwelle (7, 24, 32, 45, 48) angetrieben werden, die von dem Antrieb des Preßkolbens (3) der Ballenpresse über eine Eintourenkupplung (12, 27, 38, 46, 47) intermittierend antreibbar ist, wobei der Antrieb der Knoterwelle (7, 24, 32, 45, 48) relativ zum Preßkolbenantrieb übersetzt ist, **dadurch gekennzeichnet, daß** die Übersetzungsmittel (14 bis 18, 29, 31, 36, 37,41, 42, 43, 44, 49 bis 52) zwischen Eintourenkupplung (12, 27, 38, 46, 47) und Knoterwelle (7, 24, 32, 45, 48) angeordnet und so gestaltet sind, daß die Knoterwelle (7, 24, 32, 45, 48) während einer ganzen Umdrehung der Eintourenkupplung (12, 27, 38, 46, 47) ebenfalls eine ganze Umdrehung, jedoch schneller als die Eintourenkupplung (12, 27, 38, 46, 47) ausführt.

2. Bindevorrichtung nach Anspruch 1, **dadurch gekennzeichnet, daß** die Eintourenkupplung (12, 27, 38, 46) die Knoter- (7, 24, 32, 45) oder eine Vorgelegewelle (6) über ein Zahn- oder Tellerradsegment (16, 29, 36, 37, 41 bis 44, 49) und über ein mit diesem zusammenwirkendes, auf der Knoter- oder einer Vorgelegewelle sitzendes Zahnrad oder Ritzel (15, 31, 44) antreibt.

3. Bindevorrichtung nach Anspruch 1 oder 2, **dadurch gekennzeichnet, daß** die Geschwindigkeit der Knoterwelle (7, 24, 32, 45) durch die Wahl des Übersetzungsverhältnisses und die Größe des Winkelbereiches, d. h. die Länge des Zahn- oder Tellerradsegmentes (16, 29, 36, 37, 41 bis 44), während dem das Zahnrad oder das Ritzel (15, 31, 44) mit dem Zahn- oder Tellerradsegment (16, 29, 36, 37, 41 bis 44) kämmt, bestimmbar ist.

4. Bindevorrichtung nach einem der vorhergehenden Ansprüche, **dadurch gekennzeichnet, daß** das Zahn- oder Tellerradsegment (16, 29, 36, 37, 41 bis 44) die gleiche Zähnezahl hat wie das Zahnrad oder das Ritzel (15, 31, 44).

5. Bindevorrichtung nach einem der vorhergehenden Ansprüche 2 bis 4, **dadurch gekennzeichnet, daß** die Zahn- oder Tellerräder (16, 29, 36, 37, 41 bis 44) und die Ritzel (15, 31, 44) mit Gleitflächen (17, 18) am äußeren Umfang ausgestattet sind, die als Verdrehsicherung für die Ritzel (15, 31, 44) während ihres Nichteingriffes in die Verzahnung wirken.

6. Bindevorrichtung nach einem oder mehreren der vorhergehenden Ansprüche, **dadurch gekennzeichnet, daß** das Zahn- oder Tellerrad (43) direkt mit der Eintourenkupplung (46) verbunden ist, deren Drehachse rechtwinklig zur Knoterwelle (45) verläuft, auf welcher das mit der Knoterwelle (45) drehfest verbundene Ritzel (44) oder Zahnrad angeordnet ist.

7. Bindevorrichtung nach einem oder mehreren der vorhergehenden Ansprüche 1 bis 5, **dadurch gekennzeichnet, daß** die parallel zur Knoterwelle (24) angeordnete Vorgelegewelle (6) koaxial wenigstens auf einer Seite das Ritzel (31) eines Teller- oder Zahnradtriebes trägt, dessen Zahn- oder Tellerradsegment (29) über wenigstens einen Winkeltrieb (28) mit der Eintourenkupplung (27) verbunden ist.

8. Bindevorrichtung nach Anspruch 1, **dadurch gekennzeichnet, daß** der Knoterwelle (48) ein Getriebe (49) und diesem die Eintourenkupplung (47) vorgeschaltet ist, wobei das Getriebe (49) den Antrieb der Knoterwelle (48) übersetzt und eine mit der Knoterwelle (48) in Wirkverbindung stehende Schaltkupplung (52) die Knoterwelle (48) so startet und stoppt, daß diese ebenfalls eine Umdrehung ausführt.

9. Bindevorrichtung nach einem oder mehreren der vorhergehenden Ansprüche, **dadurch gekennzeichnet, daß** die Bindenadel (10), deren Antrieb (12 bis 21) und/oder der Antrieb des Knüpfapparates wenigstens teilweise zur Verringerung von Massenkräften aus Leichtmetall hergestellt sind.

10. Bindevorrichtung nach einem oder mehreren der vorhergehenden Ansprüche, **dadurch gekennzeichnet, daß** der Antrieb der Eintourenkupplung (12, 27, 38, 46, 47) im Verhältnis 1 : 1 zum Hub, d. h. zur Kurbelwellenumdrehung des Preßkolbens (3) arbeitet.

## Claims

1. Binding device for balers, consisting of at least one knotting device and a binding needle (10), both of which are driven by a knotter shaft (7, 24, 32, 45, 48), which is drivable intermittently by the drive of the pressing piston (3) of the baler via a one-stop clutch (12, 27, 38, 46, 47), wherein the drive of the knotter shaft (7, 24, 32, 45, 48) is geared relative to the pressing piston drive, **characterised in that** the translation means (14 to 18, 29, 31, 36, 37, 41, 42, 43, 44, 49 to 52) are disposed between the one-stop clutch (12, 27, 38, 46, 47) and knotter shaft (7, 24, 32, 45, 48) and are so configured that the knotter shaft (7, 24, 32, 45, 48) also performs one complete revolution during a complete revolution of the one-stop clutch (12, 27, 38, 46, 47), but faster than the one-stop clutch (12, 27, 38, 46, 47).

2. Binding device according to claim 1, **characterised in that** the one-stop clutch (12, 27, 38, 46) drives the knotter shaft (7, 24, 32, 45) or an intermediate shaft (6) via a toothed rim or ring gear segment (16, 29, 36, 37, 41 to 44, 49) and via a toothed rim pinion (15, 31, 44) cooperating therewith and resting on the knotter shaft or intermediate shaft.

3. Binding device according to claim 1 or 2, **characterised in that** the speed of the knotter shaft (7, 24, 32, 45) is determinable by the choice of translation ratio and the size of the angular region, i.e. length of the toothed rim or ring gear segment (16, 29, 36, 37, 41 to 44) during which the toothed rim or pinion (15, 31, 44) meshes with the toothed rim or ring gear segment (16, 29, 36, 37, 41 to 44).

4. Binding device according to one of the preceding claims, **characterised in that** the toothed rim or ring gear segment (16, 29, 36, 37, 41 to 44) has the same number of teeth as the toothed rim or pinion (15, 31, 44).

5. Binding device according to one claims 2 to 4, **characterised in that** the toothed rims or ring gears (16, 29, 36, 37, 41 to 44) and the pinions (15, 31, 44) are formed with slide faces (17,18) on the outer circumference, which act as a rotation lock for the pinions (15, 31, 44) during their non-engagement with the splining.

6. Binding device according to one or more of the preceding claims, **characterised in that** the toothed rim or ring gear (43) is connected directly to the one-stop clutch (46), whose axis of rotation extends at right-angles to the knotter shaft (45) on which the pinion (44) or toothed rim connected non-rotatably to the knotter shaft (45) is mounted.

7. Binding device according to one or more of the preceding claims 1 to 5, **characterised in that** the intermediate shaft (6) disposed parallel to the knotter shaft (24) carries coaxially at least on one side the pinion (31) of a ring gear or toothed rim drive, whose toothed rim or ring gear segment (29) is connected via at least one right-angle gear drive (28) to the one-stop clutch (27).

8. Binding device according to claim 1, **characterised in that** a transmission (49) is connected upstream of the knotter shaft (48) and the one-stop clutch (47) is connected upstream of the transmission (49), the transmission (49) translating the drive of the knotter shaft (48) and a clutch (52) in active communication with the knotter shaft (48) starts and stops the knotter shaft (48) in such a manner that this also performs a revolution.

9. Binding device according to one or more of the preceding claims, **characterised in that** the binding needle (10), whose drive (12 to 21) and/or the drive of the knotting device are manufactured from light metal at least partly to reduce the forces of mass.

10. Binding device according to one or more of the preceding claims, **characterised in that** the drive of the one-stop clutch (12, 27, 38, 46, 47) operates in a ratio of 1:1 to the stroke, i.e, to the crankshaft revolution of the pressing piston (3).

## Revendications

1. Dispositif de liage pour des presses à balles, constitué d'au moins un noueur et d'au moins une aiguille lieuse (10), qui sont tous les deux entraînés par un bec noueur (7, 24, 32, 45, 48), qui peut être activé par l'entraînement du piston de compression (3) de la presse à balles par l'intermédiaire d'un accouplement à un tour (12, 27, 38, 46, 47) par intermittence, moyennant quoi l'entraînement du bec noueur (7, 24, 32, 45, 48) est transmis par rapport à l'entraînement du piston de compression, **caractérisé en ce que** les moyens de transmission (14 à 18, 29, 31, 36, 37, 41, 42, 43, 44, 49 à 52) sont disposés entre l'accouplement à un tour (12, 27, 38, 46, 47) et le bec noueur (7, 24, 32, 45, 48) et sont agencés de telle sorte que le bec noueur (7, 24, 32, 45, 48), pendant un tour complet de l'accouplement à un tour (12, 27, 38, 46, 47), effectue également une rotation complète, mais plus vite que l'accouplement à un tour (12, 27, 38, 46, 47).

2. Dispositif de liage selon la revendication 1, **caractérisé en ce que** l'accouplement à un tour (12, 27, 38, 46) entraîne le bec noueur (7, 24, 32, 45) ou un arbre intermédiaire (6) par l'intermédiaire d'un segment de roue dentée ou de roue en couronne (16, 29, 36, 37, 41 à 44, 49) et par l'intermédiaire d'une roue dentée ou un pignon (15, 31, 44) coopérant avec celui-ci et reposant sur le bec noueur ou arbre intermédiaire.

3. Dispositif de liage selon l'une quelconque des revendications 1 ou 2, **caractérisé en ce que** la vitesse du bec noueur (7, 24, 32, 45) peut être déterminée en choisissant le rapport de transmission et la grandeur de la plage angulaire, à savoir la longueur du segment de roue dentée ou du segment de roue en couronne (16, 29, 36, 37, 41 à 44) pendant lequel la roue dentée ou le pignon (15, 31, 44) s'engrène avec le segment de roue dentée ou de roue en couronne (16, 29, 36, 37, 41 à 44).

4. Dispositif de liage selon l'une quelconque des revendications précédentes, **caractérisé en ce que** le segment de roue dentée ou de roue en couronne (16, 29, 36, 37, 41 à 44) comporte le même nombre de dents que la roue dentée ou le pignon (15, 31, 44).

5. Dispositif de liage selon l'une quelconque des revendications précédentes 2 à 4, **caractérisé en ce que** les roues dentées ou roues en couronne (16, 29, 36, 37, 41 à 44) et les pignons (15, 31, 44) sont dotés de surfaces de glissement (17, 18) sur la périphérie externe, qui font office de protection contre la torsion pour les pignons (15, 31, 44) pendant qu'ils ne sont pas en prise dans la denture.

6. Dispositif de liage selon l'une ou plusieurs des revendications précédentes, **caractérisé en ce que** la roue dentée ou roue en couronne (43) est reliée directement à l'accouplement à un tour (46) dont l'axe de rotation est perpendiculaire au bec noueur (45), sur lequel est disposée la roue dentée ou pignon (44) reliés de manière résistante à la torsion avec le bec noueur (45).

7. Dispositif de liage selon l'une ou plusieurs des revendications 1 à 5, **caractérisé en ce que** l'arbre intermédiaire (6) disposé parallèlement au bec noueur (24) supporte, de manière coaxiale, au moins d'un côté, le pignon (31) d'un mécanisme de roue dentée ou de roue en couronne, dont le segment de roue dentée ou de roue en couronne (29) est reliée par l'intermédiaire d'au moins un entraînement perpendiculaire (28) avec l'accouplement à un tour (27).

8. Dispositif de liage selon la revendication 1, **caractérisé en ce que**, en amont du bec noueur (48) est disposé un engrenage (49) et en amont de celui-ci, l'accouplement à un tour (47), moyennant quoi l'engrenage (49) transmet l'entraînement au bec noueur (48) et démarre et arrête le bec noueur (48) et un accouplement de commutation (52) qui est en coopération active avec le bec noueur (48) démarre et arrête le bec noueur (48) de telle sorte que celui-ci effectue également une rotation.

9. Dispositif de liage selon une ou plusieurs des revendications précédentes, **caractérisé en ce que** l'aiguille lieuse (10), son entraînement (12 à 21) et/ou l'entraînement du noueur sont fabriqués au moins en partie afin de réduire les forces massiques du métal léger.

10. Dispositif de liage selon une ou plusieurs des revendications précédentes, **caractérisé en ce que** l'entraînement de l'accouplement à un tour (12, 27, 38, 46, 47) fonctionne selon un rapport 1 à 1 par rapport à la course, à savoir par rapport à la rotation du vilebrequin du piston de compression (3).
